# EUROPÄISCHE PATENTSCHRIFT

(11) **EP 2 615 278 B1**
(45) Veröffentlichungstag und Bekanntmachung des Hinweises auf die Patenterteilung: **23.10.2024**
(21) Anmeldenummer: 12005835.9
(22) Anmeldetag: 11.08.2012
(51) Int. Cl.: F02D 41/00, F02D 19/02, F02M 21/02, F02M 21/04, F02D 41/14, F02D 41/18

(54) **Dosiereinrichtung mit einem Gasmischer und Verfahren zur Steuerung der Gemischbildung**
Metering device with a gas mixer and method for controlling gas mixture formation
Dispositif de dosage avec mélangeur de gaz et procédé de commande de la formation de mélange

(30) Priorität: 16.01.2012 DE 102012000567
(43) Veröffentlichungstag der Anmeldung: 17.07.2013
(73) Patentinhaber: MAN Truck & Bus SE, 80995 München (DE)
(72) Erfinder: Prümm, Werner, 90482 Nürnberg (DE); Steinert, Ralf, 90475 Nürnberg (DE)
(74) Vertreter: v. Bezold & Partner Patentanwälte - PartG mbB

(56) Entgegenhaltungen:
- EP-A1- 0 346 989
- US-A- 5 595 163
- US-A- 5 860 407
- US-A1- 2004 089 279
- US-A1- 2009 088 950
- US-B1- 6 955 160
- SZYMCZYK JANUSZ A. ET AL: "Vorlesungsskript zur Strömungstechnik", 12 March 2008 (2008-03-12), pages 1 - 110, XP055862022, Retrieved from the Internet <URL:http://www.mb.fh-stralsund.de/fss/pages/pg_lehre/st/st_vorlesung.pdf> [retrieved on 20211116]

## Beschreibung

Die Erfindung betrifft eine Dosiereinrichtung mit einem Gasmischer gemäß Oberbegriff des Patentanspruchs 1 sowie ein Verfahren zur Steuerung der Gemischbildung gemäß Patentanspruch 7.

Um einen optimalen Betrieb eines Gasmotors zu gewährleisten, muss dem Gasmotor ein Gas-Luftgemisch zugeführt werden, dessen Mischungsverhältnis in Abhängigkeit von der Motordrehzahl, der Motorlast und weiteren Betriebsbedingungen geregelt wird. Bei modernen Erdgasmotoren, wie sie auch für Kraftfahrzeuge zum Einsatz kommen, kann das in einem Gasmischer gebildete Gemisch beispielsweise über ein Common-Rail-Einspritzsystem den einzelnen Zylindern des Gasmotors zugeführt werden.

Aus der DE 196 54 699 B4 ist die Gemischbildung für einen Verbrennungsmotor beschrieben, wobei ein gasförmiger Brennstoff, zum Beispiel Erdgas, als Brennstoff verwendet wird. In einem Gasmischer wird einem Luftmassenstrom das brennbare Gas beigemischt. Die Gaszufuhr wird dabei mittels eines Tellerventils gesteuert, das proportional zur Pulsbreite eines Rechteckssignals betätigt werden kann. Die Gemischbildung im Gasmischer wird hier mittels einer Gasmengenregelung durchgeführt.

Die US 6 955 160 B1 offenbart einen Druckregler für gasförmigen Kraftstoff, der ein Einlass- und ein Auslassventil verwendet, um den Eingangsdruck aus einem Tank für gasförmigen Kraftstoff zu regeln und den Druck am Ausgang des Reglers zu steuern. Die Regelung des Ausgangsdrucks wird durch eine Bewegung des Ausgangsventils aufrechterhalten, das von einem Stellglied gesteuert wird. Das Stellglied empfängt impulsbreitenmodulierte Signale von einem Mikroprozessor, um das Auslassventil für eine Zeitspanne, die geeignet ist, den gewünschten Druck an der Auslassöffnung des Reglers aufrechtzuerhalten, in einer geöffneten oder den Gasfluss ermöglichenden Stellung zu halten. Ein Einlassanschluss hält den Druck in einer Leitung, die in Fluidverbindung zwischen dem Einlassanschluss und dem Auslassanschluss steht, auf einem Zwischendruck, der vom Auslassventil verwendet wird, um die gewünschte Ausgangsdruckgröße zu erreichen.

Der Erfindung liegt die Aufgabe zugrunde, eine Dosiereinrichtung mit einem Gasmischer für einen Gasmotor anzugeben, die einen möglichst einfachen Aufbau hat und eine druckgeregelte Gemischbildung ermöglicht. Außerdem liegt der Erfindung die weitere Aufgabe zugrunde, ein Verfahren zur Steuerung der Gemischbildung in Verbindung mit einem Gasmischer anzugeben.

Die Aufgabe, soweit sie sich auf die Dosiereinrichtung bezieht, wird mit den Merkmalen des Patentanspruchs 1 gelöst. Die weitere Aufgabe, die das Verfahren betrifft, wird mit den Merkmalen des Patentanspruchs 7 gelöst. Bevorzugte Weiterbildungen der Erfindung sind in den Unteransprüchen offenbart.

Gemäß Patentanspruch 1 ist die Dosiereinrichtung mit einem Gasmischer ausgerüstet, in dessen Mischkammer einem Luftmassenstrom ein Gas über einen hochdynamischen Druckregler zudosiert wird. Der Druckregler speist das Gas in einen die Mischkammer umgebenden Ringraum, von wo das Gas zur Mischkammer über Dosierungsbohrungen gelangt, deren Bohrungsdurchmesser so ausgelegt sind, dass sich in den Dosierungsbohrungen eine überkritische Gasströmung ergibt. Wie aus der Gasdynamik bekannt ist, hängt bei überkritischer Gasströmung die Strömungsgeschwindigkeit nur vom Druck und der Temperatur des Gases ab. Somit kann die Gasdosierung zur Mischkammer über die Dosierungsbohrungen sehr einfach mittels eines Druckreglers geregelt werden.

Als Druckregler kann hierfür ein herkömmlicher druckgeregelter, hochdynamischer, variabler Druckregler verwendet werden, der beispielsweise mit einem pulsweitenmodulierten Signal steuerbar ist.

Die vom Ringraum zur Mischkammer führenden Dosierungsbohrungen sind vorzugsweise in gleichen Winkelabständen verteilt um die Mischkammer angeordnet. Auf diese Weise wird eine homogene Gasmischbildung in der Mischkammer gewährleistet.

Die zur Steuerung des Druckreglers verwendeten Druck- und Temperatursensoren sind bevorzugt in dem genannten Ringraum angeordnet, und übermitteln Messsignale für Druck und Temperatur an eine Steuereinheit, die den Druckregler auch in Abhängigkeit von Motordrehzahl und Motorlast steuert. Über den Druckregler wird der Druck im Ringraum so geregelt, dass die jeweils erforderliche Gasmenge als überkritische Gasströmung in die Mischkammer gelangt.

Herkömmliche Druckregler, die über ein pulsweitenmoduliertes Steuersignal steuerbar sind, können problemlos zur Druckregelung in Kombination mit dem erfindungsgemäßen Gasmischer verwendet werden. Es sind aber auch Druckregler einsetzbar, die digital oder in anderer Weise steuerbar sind.

Die Mischkammer kann sehr einfach als Rohrabschnitt ausgebildet sein, der einen über seine gesamte Länge konstanten Querschnitt hat. Der Gasmischer erhält somit einen sehr einfachen Gesamtaufbau, wodurch eine entsprechend kostengünstige Herstellung möglich ist. Durch den konstanten Querschnitt arbeitet der Gasmischer Druckverlustfrei.

Die vom Ringraum zur Mischkammer führenden Dosierungsbohrungen können zum Betrieb eines Nutzfahrzeugmotors mit einer Leistung von etwa 200 kW einen Bohrungsdurchmesser von etwa 1,2 mm bis 2,0 mm haben, wobei dann typischerweise 8 bis 12 Dosierungsbohrungen gleichmäßig verteilt zwischen dem Ringraum und der Mischkammer angeordnet sind. Der Bohrungsdurchmesser wird in jedem Fall so gewählt, dass in den Dosierungsbohrungen eine überkritische Gasströmung sichergestellt ist.

Bei dem erfindungsgemäßen Verfahren gemäß Patentanspruch 7 wird aus dem jeweils aktuellen Luftmassenstrom die Zudosierung des brennbaren Gases für einen benötigten Gasmengenstrom berechnet, woraus wiederum unter Berücksichtigung der aktuellen Gastemperatur der erforderliche Gasdruck bestimmt wird. Entsprechend kann dann der Druckregler mittels eines analogen oder digitalen Steuersignals gesteuert werden. Dabei kann als analoges Steuersignal ein pulsweitenmoduliertes Signal verwendet werden, dessen Pulsweite ein analoges Maß zur Druckeinstellung darstellt.

Zur Bereitstellung eines geeigneten pulsweitenmodulierten Steuersignals zur Ansteuerung des Druckreglers ist gemäß einer bevorzugten Weiterbildung der Erfindung vorgesehen, dass zu einem gemessenen oder berechneten Luftmassenstrom aus einem vorgegebenen Luftverhältnis ein Gasmassenstrom und daraus unter Berücksichtigung der Gastemperatur ein erster Solldruckwert und daraus ein erstes pulsweitenmoduliertes Vorsteuersignal bestimmt wird.

Durch einen Soll-lst-Vergleich zwischen Solldruckwert und Istdruck kann ein zweites pulsweitenmoduliertes Vorsteuersignal erzeugt werden, welches mit dem ersten Vorsteuersignal in einem gewissen Verhältnis verknüpft wird, um daraus dann das eigentliche Steuersignal zur Ansteuerung des Druckreglers abzuleiten. Dabei kann das Regelverhalten in Verbindung mit einem PID-Regler an unterschiedliche Motoren oder Motorkenndaten angepasst werden.

Die in modernen Ottomotoren übliche Lambdaregelung ermittelt einen Regelfaktor, der aufgrund der linearen Beziehung zwischen Gasmassenstrom und Gasdruck unmittelbar mit dem ersten Solldruckwert multipliziert werden kann. Dabei ist auch die Anwendung der adaptiven Lambdaregelung mit den Faktoren fra (adaptiver Faktor), fr (schneller Regelfaktor) und rka (adaptiver Summand) möglich. Aus dem resultierenden Solldruckwert wird über eine Kennlinie ein Vorsteuertastverhältnis berechnet.

Ein mittels eines PID-Reglers erzeugter Regeldruckwert kann auf einfache Weise durch Beaufschlagung mit einem Umwandlungsfaktor in ein entsprechendes pulsweitenmoduliertes Signal umgewandelt werden, das zusammen mit dem Vorsteuertastverhältnis zur Erzeugung eines resultierenden Tastverhältnisses herangezogen werden kann.

Gegenüber herkömmlichen Systemen zur Gemischbildung für Gasmotoren wird mit der Erfindung eine erhebliche Kostenersparnis durch geringere Anzahl von Bauteilen erreicht. Der Gasmischer ist äußerst kompakt, so dass in Verbindung mit dem ebenfalls kompakten Druckregler ein besonders geringer Raumbedarf erforderlich ist. Durch die hohe Einströmgeschwindigkeit von den Dosierungsbohrungen zur Mischkammer erhält man einen hohen Homogenisierungsgrad für das Gas-Luftgemisch.

Außerdem kann eine Schadstoffemissionsminderung durch eine verbesserte Lambdanachführung im dynamischen Betrieb erreicht werden. Im Gasmischer werden außerdem keine verlusterzeugenden Einbauteile benötigt, wodurch unnötige Druckverluste vermieden werden und eine höhere Leistung und ein verbesserter Wirkungsgrad des Gasmotors erreicht werden.

Die Erfindung wird nachfolgend anhand von in der Zeichnung dargestellten Ausführungsbeispielen näher erläutert.

Es zeigen:
- Fig. 1: ein Blockschaltbild einer Steuerung zur Ansteuerung eines Druckreglers und
- Fig. 2: ein Blockschaltbild einer Dosiereinrichtung mit einem Druckregler und einem überkritischen Gasmischer zur Gemischbildung für einen Gasmotor.

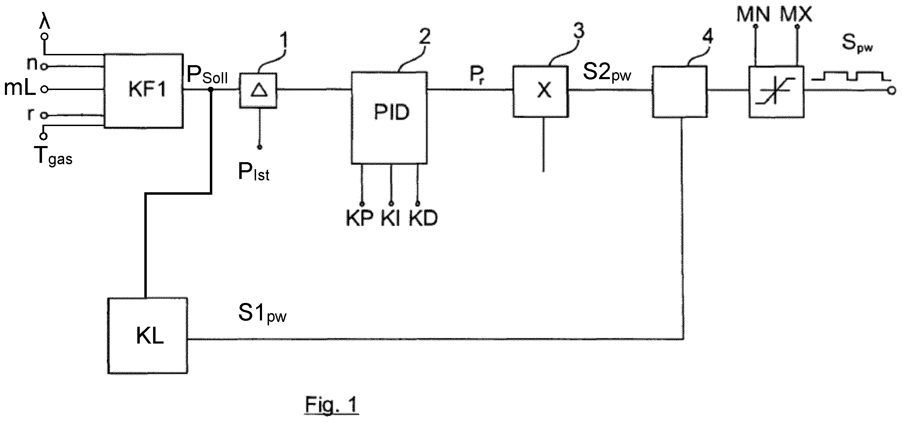

Das in Figur 1 vereinfacht dargestellte Blockschaltbild einer Steuerung zur Bereitstellung eines pulsweitenmodulierten Steuersignals S_{pw}, mit dem die Gemischbildung in einem Gasmischer eines Gasmotors gesteuert wird, erfasst eingangsseitig an einer Steuereinheit SE den Luftmassenstrom mL, die Gastemperatur T_{Gas}, die Motordrehzahl n und die Motorlast r. Aus einem Lambdakennfeld KF1 über r und n wird ein zugehöriger Gasmassenstrom berechnet. Unter Berücksichtigung der Gastemperatur wird daraus ein erster Solldruckwert Pₛₒₗₗ₋ᵣₒₕ berechnet. Aus Pₛₒₗₗ₋ᵣₒₕ wird mittels Lambdaregelung ein einzustellender Solldruck Pₛₒₗₗ berechnet. Mit Hilfe einer Kennlinie KL wird nunmehr aus dem Solldruck Pₛₒₗₗ ein erstes pulsweitenmoduliertes Vorsteuersignal S1_{pw} bestimmt. Außerdem wird der Solldruck Pₛₒₗₗ mit einem gemessenen Istdruck Pᵢₛₜ in einem Vergleicher 1 verglichen, der das Vergleichsergebnis an einen PID-Regler 2 übermittelt. Am Reglerausgang des PID-Reglers 2 gibt dieser einen Regeldruckwert Pᵣ an einen Umwandler 3 ab, der das Regelsignal in ein zweites pulsweitenmoduliertes Vorsteuersignal S2_{pw} umwandelt. Der Regeldruckwert Pᵣ wird mit einem Umwandlungsfaktor F beaufschlagt, mit dem der Regeldruckwert Pᵣ in ein zweites pulsweitenmoduliertes Vorsteuersignal S2_{pw} mit einem zu diesem Umwandlungsfaktor F proportionalen Tastverhältnis umgewandelt wird. Das Vorsteuersignal S1_{pw} sowie das Vorsteuersignal S2_{pw} werden in einer Bewertungseinrichtung 4 zur Erzeugung des pulsweitenmodulierten Steuersignals S_{pw} miteinander verknüpft. Ein Begrenzer 5 kann das Steuersignal S_{pw} auf einen einstellbaren Minimalwert MN und einen einstellbaren Maximalwert MX begrenzen, d. h. die minimale und maximale Pulsbreite des Steuersignals S_{pw} werden auf entsprechende Werte MN und MX begrenzt.

In der Bewertungseinrichtung 4 können die beiden Vorsteuersignale S1_{pw} und S2_{pw} beispielsweise so miteinander verknüpft werden, dass ein Mittelwert aus den beiden Signalpulsbreiten zur Bildung des pulsbreitenmodulierten Steuersignals S_{pw} ermittelt wird. Grundsätzlich sind aber auch andere Bewertungen beider Vorsteuersignale möglich, so dass beispielsweise das Vorsteuersignal S1_{pw} nur zu einem geringeren Prozentanteil auf das ausgangsseitige Steuersignal S_{pw} Einfluss nimmt.

Der PID-Regler 2 besitzt drei Eingänge, denen die Verstärkungsfaktoren KP, KI, KD für den Proportionalanteil (KP), den Integralanteil (KI) und den Differenzialanteil (KD) eingegeben werden können. Dadurch kann der PID-Regler2 in seinem Regelverhalten auf unterschiedliche Randbedingungen durch eine geeignete Wahl der Verstärkungsfaktoren eingestellt werden.

Die vereinfacht in Figur 1 dargestellte Steuerung kann auch Teil eines Motorsteuergeräts sein. Das dargestellte Verfahren zur Bereitstellung des Steuersignals S_{pw} stellt eine mögliche Ausführungsform beispielhaft dar.

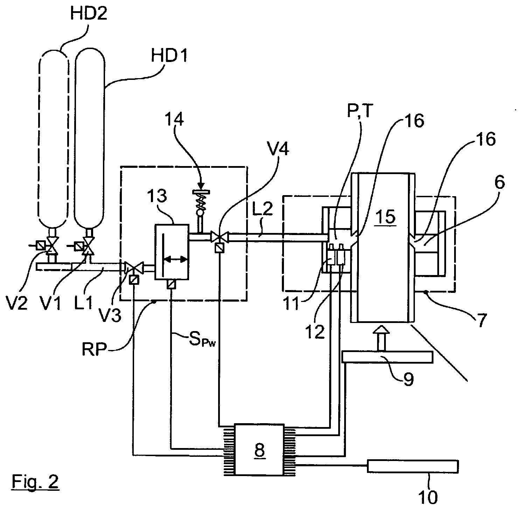

Das in Figur 2 dargestellte Blockschaltbild umfasst beispielhaft zwei Hochdruckspeicher HD1 und HD2, die über Absperrventile V1, V2 und eine Hochdruckleitung L1 an einen hochdynamischen, variablen Druckregler RP angeschlossen sind. Der Druckregler RP speist ausgangsseitig über eine Druckleitung L2 Gas mit einem geregelten Gasdruck in einen Ringraum 6 eines Gasmischers 7. Der Gasdruck in der Druckleitung L2 wird mittels eines Steuergeräts 8 in Abhängigkeit vom Luftmassenstrom mL, von dem Lambdasignal eines Lambdasensors 10 und in Abhängigkeit von Druck und Temperatur im Ringraum 6 geregelt. Druck und Temperatur werden dem Steuergerät 8 von einem Temperatursensor 11 und einem Drucksensor 12 übermittelt, die in den Ringraum 6 hineinragen.

Das Steuergerät 8 steuert ausgangsseitig den Druckregler RP, der im Wesentlichen zur Druckeinstellung ein Stellglied 13 enthält. Ein Hochdruck-Absperrventil V3 und ein Niederdruck-Absperrventil V4 werden ebenfalls vom Steuergerät 8 gesteuert. Außerdem ist ein Überdruckventil 14 an der zum Gasmischer7 führenden Druckleitung L2 vorgesehen. Das Stellglied 13 ist Teil eines herkömmlichen Druckreglers RP, der beispielsweise mit einem pulsbreitenmodulierten Steuersignal S_{pw} , das in Zusammenhang mit Figur 1 beschrieben ist, gesteuert werden kann.

Der Gasmischer 7 besitzt eine aus einem Rohrabschnitt bestehende Mischkammer 15, die über mehrere am Umfang verteilt angeordnete Dosierungsbohrungen 16 in Fluidverbindung mit dem Ringraum 6 steht. In den Dosierungsbohrungen 16 besteht eine überkritische Gasströmung, so dass in Abhängigkeit von den Messsignalen des Temperatursensors 11 und des Drucksensors 12 der Gasdruck in der Druckleitung L2 und damit indirekt die durch die Dosierungsbohrungen 16 strömende Gasmenge gesteuert werden kann. Bei der überkritischen Strömung hängt die Strömungsgeschwindigkeit nur vom Druck P und von der Temperatur T in dem Ringraum 6 ab.

## Patentansprüche

1. Dosiereinrichtung für einen Gasmotor mit einem Gasmischer (7), in dessen Mischkammer (15) einem Luftmassenstrom (9) ein brennbares Gas zudosiert wird, wobei die Dosiereinrichtung umfasst:
einen hochdynamischen Druckregler (RP), der zur Druckeinstellung ein Stellglied (13) enthält und an den ein Hochdruckspeicher (HD1) über eine Hochdruckleitung angeschlossen ist, das Gas in einen die Mischkammer (15) umgebenden Ringraum (6) einspeist, und
eine Steuerung (8); und
einen Drucksensor (12), der einen Gasdruck (Pᵢₛₜ) misst; und
einen Temperatursensor (11), der eine Gastemperatur (T_{gas}) misst; und
einen Lambdasensor (10), der einen Lambdawert (λ) misst; und
Mittel (9), um den Luftmassenstrom (mL) zu messen oder zu berechnen;
wobei die gemessenen oder berechneten Signale an die Steuerung (8) übermittelt werden; und
wobei die Steuerung (8) die Zudosierung des hochdynamischen Druckreglers (RP) mindestens in Abhängigkeit von dem gemessenen Gasdruck (Pᵢₛₜ), der gemessenen Gastemperatur (T_{gas}), dem Lambdawert (λ) und dem gemessenen oder berechneten Luftmassenstrom (mL) steuert;
**dadurch gekennzeichnet, dass** von dem Ringraum (6) zur Mischkammer (15) Dosierungsbohrungen (16) führen, deren Bohrungsdurchmesser so ausgelegt sind, dass in den Dosierungsbohrungen (16) eine überkritische Gasströmung besteht, und
dass der Drucksensor (12) und der Temperatursensor (11) im Ringraum (6) angeordnet sind,
wobei die Strömungsgeschwindigkeit bei der überkritischen Strömung nur vom Gasdruck und von der Temperatur in dem Ringraum (6) abhängt.

2. Dosiereinrichtung nach Anspruch 1, **dadurch gekennzeichnet, dass** die Dosierungsbohrungen (16) in gleichen Winkelabständen verteilt um die Mischkammer (15) angeordnet sind.

3. Dosiereinrichtung nach einem der vorhergehenden Ansprüche, **dadurch gekennzeichnet, dass** der Druckregler (RP) mit einem pulsweitenmodulierten Steuersignal (S_{pw}) steuerbar ist, wobei der Gasdruck im Ringraum (6) von dem Tastverhältnis des Steuersignals (S_{pw}) abhängt.

4. Dosiereinrichtung nach einem der vorhergehenden Ansprüche, **dadurch gekennzeichnet, dass** die Mischkammer (15) als Rohrabschnitt mit einem über seine gesamte Länge konstantem Strömungsquerschnitt ausgebildet ist.

5. Dosiereinrichtung nach einem der vorhergehenden Ansprüche, **dadurch gekennzeichnet, dass** für die Anwendung bei einem Nutzfahrzeuggasmotor mit einer Leistung von ca. 200 kW im Gasmischer (7) typischerweise acht bis zwölf Dosierungsbohrungen (16) mit vorzugsweise gleichen Bohrungsdurchmessern vorgesehen sind, wobei die Bohrungsdurchmesser in einem Bereich zwischen 1,2mm und 2,0mm liegen.

6. Dosiereinrichtung nach einem der vorhergehenden Ansprüche, **dadurch gekennzeichnet, dass** das Gasgemisch vom Gasmischer (7) über Ansaug- oder Ladeluftkrümmer zu den Brennkammern des Gasmotors gelangt.

7. Verfahren zur Steuerung der in einer Dosiereinrichtung gemäß einem der Ansprüche 1-6 erfolgenden Gemischbildung für den Betrieb eines Gasmotors
**dadurch gekennzeichnet, dass** unter Berücksichtigung des gemessenen oder berechneten Luftmassenstroms (mL), der Motordrehzahl (n), der Motorlast (r), der gemessenen Gastemperatur (T_{Gas}) und des gemessenen Lambdawerts (λ) mit Hilfe eines Lambdakennfels (KF1) ein Solldruckwert (Pₛₒₗₗ) und anschließend aus dem Solldruckwert (Pₛₒₗₗ) ein erstes Vorsteuersignal (S1_{pw}) ermittelt werden, und dass aus der Differenz zwischen dem Solldruckwert (Pₛₒₗₗ) und einem gemessenen Istdruck (Pᵢₛₜ) ein Regeldruckwert (Pᵣ) abgeleitet wird, dass der Regeldruckwert (Pᵣ) in ein zweites Vorsteuersignal (S2_{pw}) umgewandelt wird, und dass aus einer Gewichtung der beiden Vorsteuersignale (S1_{pw}, S2_{pw}) ein Steuersignal (S_{pw}) zur Ansteuerung des Druckreglers (RP) abgeleitet wird.

8. Verfahren nach Anspruch 7, **dadurch gekennzeichnet, dass** aus der Differenz zwischen dem Solldruckwert (Pₛₒₗₗ) und dem Istdruck (Pᵢₛₜ) ein PID-Regler (2) mit einstellbaren Verstärkungsfaktoren (KP, KI, KD), die den Proportionalanteil, den Integralanteil und den Differenzialanteil betreffen, den Regeldruckwert (Pᵣ) erzeugt.

9. Verfahren nach einem der Ansprüche 7 oder 8, **dadurch gekennzeichnet, dass** der Regeldruckwert (Pᵣ) mit einem Umwandlungsfaktor (F) beaufschlagt wird, mit dem der Regeldruckwert (Pᵣ) in ein pulsweitenmoduliertes Vorsteuersignal (S2_{pw}) mit einem zu diesem Umwandlungsfaktor (F) proportionalen Tastverhältnis umgewandelt wird.

10. Verfahren nach einem der Ansprüche 8 bis 9, **dadurch gekennzeichnet, dass** zur Berechnung des Solldruckwertes (Pₛₒₗₗ) Korrekturwerte einer adaptiven Lambdaregelung herangezogen werden.

## Claims

1. A dosing device for a gas engine having a gas mixer (7), in whose mixing chamber (15) a combustible gas is dosed into an air mass flow (9), the dosing device comprising
a highly dynamic pressure regulator (RP), comprising an actuator (13) for pressure adjustment and to which a high-pressure reservoir (HD1) is connected via a high-pressure line, which supplies gas into an annular space (6) surrounding the mixing chamber (15), and
a controller (8); and
a pressure sensor (12) measuring a gas pressure (Pᵢₛₜ); and
a temperature sensor (11) measuring a gas temperature (T_{gas}); and
a lambda sensor (10) measuring a lambda value (λ); and
means (9) for measuring or calculating the mass air flow (mL);
wherein the measured or calculated signals are transmitted to the controller (8); and
wherein the controller (8) controls the dosing of the highly dynamic pressure regulator (RP) at least as a function of the measured gas pressure (Pᵢₛₜ), the measured gas temperature (T_{gas}), the lambda value (λ) and the measured or calculated air mass flow (mL);
**characterised in that** dosing bores (16) lead from the annular space (6) to the mixing chamber (15), whose bore diameters are configured such that a supercritical gas flow occurs in the dosing bores (16), and
that the pressure sensor (12) and the temperature sensor (11) are arranged in the annular space (6),
wherein the flow velocity in the supercritical flow depends only on the gas pressure and on the temperature in the annular space (6).

2. The dosing device according to claim 1, **characterised in that** the dosing bores (16) are arranged at equal angular intervals around the mixing chamber (15).

3. The dosing device according to one of the preceding claims, **characterised in that** the pressure regulator (RP) is controllable with a pulse-width modulated control signal (S_{pw}), the gas pressure in the annular space (6) depending on the duty cycle of the control signal (S_{pw}).

4. The dosing device according to one of the preceding claims, **characterised in that** the mixing chamber (15) is configured as a pipe section with a constant flow cross-section over its entire length.

5. The dosing device according to one of the preceding claims, **characterised in that,** for use with a commercial vehicle gas engine with an output of approximately 200 kW, typically eight to twelve dosing bores (16) with preferably the same bore diameters are provided in the gas mixer (7), the bore diameters being in a range between 1.2 mm and 2.0 mm.

6. The dosing device according to one of the preceding claims, **characterised in that** the gas mixture from the gas mixer (7) reaches the combustion chambers of the gas engine via intake or charge air manifolds.

7. A method for controlling mixture formation for the operation of a gas engine, taking place in a dosing device according to one of claims 1-6, **characterised in that,** a target pressure value (Pₛₒₗₗ) is determined via a lambda map (KF1) and by taking into account the measured or calculated air mass flow (mL), the engine speed (n), the engine load (r), the measured gas temperature (T_{Gas}), and the measured lambda value (λ), and then a first pre-control signal (S1_{pw}) is determined from the target pressure value (Pₛₒₗₗ), and **in that** a control pressure value (Pᵣ) is derived from the difference between the target pressure value (Pₛₒₗₗ) and a measured actual pressure (Pᵢₛₜ), **in that** the control pressure value (Pᵣ) is converted into a second pre-control signal (S2_{pw}), and **in that** a control signal (S_{pw}) for actuating the pressure regulator (RP) is derived from a weighting of the two pilot control signals (S1_{pw}, S2_{pw}).

8. The method according to claim 7, **characterised in that** a PID controller (2) with adjustable amplification factors (KP, KI, KD), which relate to the proportional component, the integral component and the differential component, generates the control pressure value (Pᵣ) from the difference between the target pressure value (Pₛₒₗₗ) and the actual pressure (Pᵢₛₜ).

9. The method according to one of claims 7 or 8, **characterised in that** a conversion factor (F) is applied to the control pressure value (Pᵣ), with which the control pressure value (Pᵣ) is converted into a pulse-width-modulated pilot control signal (S2_{pw}) with a duty cycle proportional to this conversion factor (F).

10. The method according to one of claims 8 to 9, **characterised in that** correction values of an adaptive lambda control are used to calculate the target pressure value (Pₛₒₗₗ).

## Revendications

1. Dispositif de dosage pour un moteur à gaz pourvu d'un mélangeur de gaz (7) dans la chambre de mélange (15) duquel un gaz combustible est ajouté à un débit d'air massique (9), le dispositif de dosage comprenant :
un régulateur de pression (RP) hautement dynamique qui comporte un actionneur (13) pour le réglage de pression et auquel est raccordé un réservoir haute pression (HD1) par l'intermédiaire d'une conduite haute pression, qui injecte du gaz dans un espace annulaire (6) entourant la chambre de mélange (15), et
un dispositif de commande (8) ; et
un capteur de pression (12) qui mesure une pression de gaz (Pᵢₛₜ) ; et
un capteur de température (11) qui mesure une température de gaz (T_{gas}) ; et
une sonde lambda (10) qui mesure une valeur lambda (À) ; et
des moyens (9) pour mesurer ou calculer le débit d'air massique (mL) ;
dans lequel les signaux mesurés ou calculés sont transmis au dispositif de commande (8) ; et
dans lequel le dispositif de commande (8) commande le dosage additionnel du régulateur de pression (RP) hautement dynamique au moins en fonction de la pression de gaz (Pᵢₛₜ) mesurée, de la température de gaz (T_{gas}) mesurée, de la valeur lambda (λ) et du débit d'air massique (mL) mesuré ou calculé ;
**caractérisé en ce que** des trous de dosage (16) vont de l'espace annulaire (6) à la chambre de mélange (15), dont le diamètre de perçage est conçu de telle sorte qu'il existe un écoulement de gaz supercritique dans les trous de dosage (16), et
**en ce que** le capteur de pression (12) et le capteur de température (11) sont disposés dans l'espace annulaire (6),
dans lequel la vitesse d'écoulement pour l'écoulement supercritique ne dépend que de la pression de gaz et de la température dans l'espace annulaire (6) .

2. Dispositif de dosage selon la revendication 1, **caractérisé en ce que** les trous de dosage (16) sont répartis autour de la chambre de mélange (15) à intervalles angulaires réguliers.

3. Dispositif de dosage selon l'une quelconque des revendications précédentes, **caractérisé en ce que** le régulateur de pression (RP) peut être commandé par un signal de commande (S_{pw}) modulé en largeur d'impulsion, dans lequel la pression de gaz dans l'espace annulaire (6) dépend du facteur d'utilisation du signal de commande (S_{pw}).

4. Dispositif de dosage selon l'une quelconque des revendications précédentes, **caractérisé en ce que** la chambre de mélange (15) est réalisée sous forme de tronçon de tuyau ayant une section transversale d'écoulement constante sur toute sa longueur.

5. Dispositif de dosage selon l'une quelconque des revendications précédentes, **caractérisé en ce que** pour l'application sur un moteur à gaz de véhicule utilitaire d'une puissance d'environ 200 kW, typiquement huit à douze trous de dosage (16) de préférence du même diamètre de perçage sont prévus dans le mélangeur de gaz (7), dans lequel les diamètres de perçage sont compris dans une plage entre 1,2 mm et 2,0 mm.

6. Dispositif de dosage selon l'une quelconque des revendications précédentes, **caractérisé en ce que** le mélange de gaz atteint les chambres de combustion du moteur à gaz à partir du mélangeur de gaz (7) en passant par des collecteurs d'admission ou des collecteurs d'air de suralimentation.

7. Procédé permettant de commander la formation d'un mélange survenant dans un dispositif de dosage selon l'une quelconque des revendications 1 à 6 pour le fonctionnement d'un moteur à gaz,
**caractérisé en ce qu'**en tenant compte du débit d'air massique (mL) mesuré ou calculé, de la vitesse de rotation du moteur (n), de la charge du moteur (r), de la température de gaz (T_{Gas}) mesurée et de la valeur lambda (λ) mesurée à l'aide d'un diagramme caractéristique lambda (KF1), une valeur de pression de consigne (Pₛₒₗₗ) et ensuite à partir de la valeur de pression de consigne (Pₛₒₗₗ) un premier signal pilote (S1_{pw}) sont établis, et **en ce qu'**à partir de la différence entre la valeur de pression de consigne (Pₛₒₗₗ) et une pression réelle (Pᵢₛₜ) mesurée, une valeur de pression de régulation (Pᵣ) est dérivée,
**en ce que** la valeur de pression de régulation (Pᵣ) est convertie en un deuxième signal pilote (S2_{pw}), et
**en ce qu'**à partir d'une pondération des deux signaux pilotes (S1_{pw}, S2_{pw}), un signal de commande (S_{pw}) pour piloter le régulateur de pression (RP) est dérivé.

8. Procédé selon la revendication 7, **caractérisé en ce qu'**à partir de la différence entre la valeur de pression de consigne (Pₛₒₗₗ) et la pression réelle (Pᵢₛₜ), un régulateur PID (2) génère la valeur de pression de régulation (Pᵣ) avec des facteurs de gain (KP, KI, KD) réglables qui concernent la part proportionnelle, la part intégrale et la part différentielle.

9. Procédé selon l'une quelconque des revendications 7 ou 8, **caractérisé en ce que** la valeur de pression de régulation (Pᵣ) est soumise à un facteur de conversion (F) avec lequel la valeur de pression de régulation (Pᵣ) est convertie en un signal pilote (S2_{pw}) modulé en largeur d'impulsion avec un facteur d'utilisation proportionnel à ce facteur de conversion (F).

10. Procédé selon l'une quelconque des revendications 8 à 9, **caractérisé en ce que** des valeurs de correction d'une régulation lambda adaptive sont utilisées pour le calcul de la valeur de pression de consigne (Pₛₒₗₗ).
